# EUROPÄISCHE PATENTANMELDUNG

(11) **EP 2 508 064 A1**
(43) Veröffentlichungstag der Anmeldung: **10.10.2012**
(21) Anmeldenummer: 12001963.3
(22) Anmeldetag: 20.03.2012
(51) Int. Cl.: A01G 13/02

(54) **Vorrichtung zum Verhindern eines Unkrautwachstums und Verfahren zum Eintopfen einer Pflanze**

(30) Priorität: 06.04.2011 DE 102011016268
(71) Anmelder: Artmeyer, Norbert, 48477 Hörstel-Riesenbeck (DE)
(72) Erfinder: Artmeyer, Norbert, 48477 Hörstel-Riesenbeck (DE)
(74) Vertreter: Castell, Klaus

(57) **Zusammenfassung**

Zum automatisierten Einpflanzen von Pflanzen in Töpfe wird eine Vorrichtung zum Verhindern eines Unkrautwachstums mit einem Grundkörper aus einem lichtundurchlässigen Kunststoffmaterial vorgeschlagen, in dem ein Schnittmuster vorgesehen ist, das eine zentrale Öffnung und von der zentralen Öffnung sternförmig verlaufende Einschnitte aufweist. Dieses Schnittmuster hat einen von einer äußeren Umfangslinie radial nach innen zur zentralen Öffnung verlaufenden Einschnitt.

Mit einer derartigen Vorrichtung ist ein Verfahren zum Eintopfen einer Pflanze möglich, bei dem die Pflanze in einem mit Erde gefüllten Topf positioniert wird und vor dem Positionieren der Pflanze der Topf mit einer Vorrichtung zum Verhindern von Unkrautwachstum abgedeckt wird.

## Beschreibung

Die Erfindung betrifft eine Vorrichtung zum Verhindern eines Unkrautwachstums und ein Verfahren zum Eintopfen einer Pflanze.

Eine Vorrichtung zum Verhindern eines Unkrautwachstums mit einem Grundkörper aus einem lichtundurchlässigen Kunststoffmaterial ist beispielsweise aus der WO 2008/113319 A1 bekannt. Diese Vorrichtung wird als runde Scheibe am Stiel einer Pflanze so angebracht, dass ein mittlerer Bereich der Vorrichtung am Stiel der Pflanze anliegt und der übrige Bereich die Erde abdeckt. Dazu kann die Vorrichtung auf einfache Art und Weise an den Stiel der eingetopften Pflanze befestigt werden. Da die Vorrichtung lichtundurchlässig aber wasserdurchlässig ist, kann die Pflanze im Topf auf bekannte Art und Weise gegossen werden während die Vorrichtung als Abdeckung der Erde ein Unkrautwachstum einschränkt oder sogar verhindert.

Die DE 20 2006 006 171 U1 beschreibt eine ähnliche Vorrichtung aus einem wasserundurchlässigem Material. Hier wird eine kreisförmige Scheibe radial so eingeschnitten, dass durch Übereinanderlegen der Schnittkannten ein Trichter entsteht. Diese Vorrichtung dient dazu, das um eine Pflanze auf die Vorrichtung treffende Niederschlagswasser zur Pflanze hinzuführen und um die Pflanze herum die Verdunstung einzuschränken.

Die FR 2 568 447 beschreibt eine Vorrichtung zum Abdecken einer Pflanzfläche mit einem zentralen Loch oder mehreren zentralen Löchern, von denen sternförmig Einschnitte ausgehen. Diese Vorrichtung dient dazu, Flächen auf Feldern abzudecken. Die Löcher ermöglichen es, auf dem Feld wachsenden Pflanzen durch die Folie hindurch zu wachsen, sodass der Boden abgedeckt ist und sich die Folie um den Stiel einer Pflanze erstreckt.

Die US 5,325,627 beschreibt eine zweiteilige Abdeckung aus zwei sichelförmigen Elementen, die so an den Stiel einer Pflanze angelegt werden können, dass sie die Erde in einem Topf bedecken und trotzdem möglichst nah am Stiel der Pflanze anliegen.

Eine andere Ausführungsform einer Topfabdeckung zeigt die DE 38 23 580 A1, bei der mit speziellen Einschnitten auf einer kreisförmigen Scheibe eine Topfabdeckung erzeugt wird, die einfach an den Stiel einer Pflanze anlegbar ist und einen möglichst großen Bereich der Erde abdeckt.

Der Erfindung liegt die Aufgabe zugrunde, eine Vorrichtung zum Verhindern eines Unkrautwachstums derart weiter zu entwickeln, dass sie besonders leicht auch bei automatisierten Pflanzverfahren verwendet werden kann.

Diese Aufgabe wird mit einer gattungsgemäßen Vorrichtung gelöst, bei der das Schnittmuster einen von einer äußeren Umfangslinie radial nach innen zur zentralen Öffnung verlaufenden Einschnitt aufweist.

Vorrichtungen zum Verhindern von Unkrautwachstum sind entweder als Folie ausgestaltet und haben eine zentrale Öffnung und von der zentralen Öffnung sternförmig weglaufende Einschnitte wie beispielsweise in der FR 2 568 447. Hier wächst die Pflanze durch die Folie. Andere Vorrichtungen haben unterschiedliche Schnittmuster, um die Vorrichtung an unterschiedliche Stieldurchmesser anlegen zu können und möglichst viel Erde abzudecken. Dabei liegt entweder ein Teil der Vorrichtung am Stiel der Pflanze an oder es wird die Erde nur ungenügend abgedeckt. Alle diese Vorrichtungen eigenen sich nicht für automatische Pflanzverfahren, bei denen die Pflanzen automatisch eingetopft werden.

Die erfindungsgemäße Vorrichtung erlaubt es, nach dem Füllen eines Topfes mit Erde in den Topf die Vorrichtung zu legen und auf konventionelle Weise einen Setzling in die Erde zu pflanzen, obwohl die Vorrichtung die Erde abdeckt. Dabei legt die zentrale Öffnung mit den sternförmig weglaufenden Einschnitten einen mittleren Bereich frei, durch den der Setzling in den Topf eingepflanzt wird.

Erfreulicher Weise hat sich gezeigt, dass der automatische Pflanzvorgang so durchgeführt werden kann, dass anschließend die Vorrichtung zum Verhindern eines Unkrautwachstums einen großen Teil der Erde im Topf abdeckt und die Pflanze ungehindert von der Vorrichtung umgeben wachsen kann. Der radiale Einschnitt von der äußeren Umfangslinie zur zentralen Öffnung dient dann nur noch dem Entfernen der Vorrichtung, wenn sie nicht mehr benötigt wird.

Der Bereich des Grundkörpers zwischen den sternförmig weglaufenden Einschnitten kann plastisch verformbar sein, damit je nach Pflanzenballen eine größere oder kleinere Öffnung freigegeben wird, in die die Pflanze gesetzt wird. Vorteilhaft ist es jedoch, wenn dieser Bereich elastisch ist. Dies ermöglicht es den Ballen der Pflanze so durch die zentrale Öffnung zu stecken, dass zumindest die zentrale Öffnung durch die sternförmig weglaufenden Einschnitte sich erweitert und anschließend der Bereich des Grundkörpers zwischen den sternförmig weglaufenden Einschnitten wieder zurückklappt, sodass die Vorrichtung nach dem Einpflanzen der Pflanze wieder nahezu plan im Topf liegt.

Der Grundkörper kann flüssigkeitsundurchlässig sein, um das Gießwasser zur zentralen Öffnung zu leiten. Hierzu kann der Grundkörper auch trichterförmig ausgebildet sein.

Eine vorteilhafte Ausführungsvariante sieht vor, dass der Grundkörper aus einem flüssigkeitsdurchlässigen Kunststoffmaterial hergestellt ist. Dies ermöglicht es, den gesamten oberen Bereich der Erde, der von der Vorrichtung abgedeckt ist, feucht zu halten.

Besonders bevorzugt ist ein Grundkörper aus einem Vlies aus Polyesterfasern, da ein derartiger Grundkörper leicht herstellbar, wasserdurchlässig und unverrottbar ist. Nach Gebrauch können diese Vorrichtungen verbrannt werden.

Besonders vorteilhaft ist es, wenn das Kunststoffmaterial des Grundkörpers UV-strahlenstabil ist. Da die Pflanzen für das Wachstum der Sonne ausgesetzt sein sollten, ist darauf zu achten, dass durch den UV-Strahlenanteil der Sonnenstrahlung das Kunststoffmaterial nicht beschädigt wird.

Um mehrere Pflanzen gleichzeitig zu bearbeiten, wird vorgeschlagen, dass das Schnittmuster mehrere zentrale Öffnungen aufweist.

Wenn der Einschnitt mehrere zentrale Öffnungen schneidet, dann kann die Vorrichtung leicht von einer Kiste mit mehreren Töpfen angezogen werden.

Die der Erfindung zu Grunde liegende Aufgabe wird auch mit einem Verfahren zum Eintopfen einer Pflanze gelöst, bei dem die Pflanze in einem mit Erde gefüllten Topf positioniert wird. Erfindungsgemäß wird vor dem Positionieren der Pflanze der Topf mit einer Vorrichtung zum Verhindern von Unkrautwachstum abgedeckt. Hierzu wird insbesondere eine der oben beschriebenen Vorrichtungen verwendet.

Während es bisher notwendig war, zunächst die Pflanze einzupflanzen und anschließend vorsichtig die Vorrichtung zum Verhindern von Unkrautwachstum am Stiel der jungen Pflanze zu befestigen, schlägt das erfindungsgemäße Verfahren vor, die Pflanze durch die Vorrichtung hindurch in den Topf zu pflanzen. Dadurch positioniert sich die Vorrichtung automatisch relativ zum Stiel der Pflanze, ohne dass die Vorrichtung mit dem Stiel der Pflanze in Berührung kommen muss.

Während bekannte Vorrichtungen zum Verhindern von Unkrautwachstum manuell an eine Topfpflanze angelegt werden mussten und sowohl beim Anlegen als auch beim Entfernen die Vorrichtung am Stiel der jungen Pflanze reiben, ermöglicht die neue Vorrichtung mit dem neuen Verfahren die Verwendung der Vorrichtung in einer vollautomatisierten Pflanzlinie, mit der extrem schnell automatisch gepflanzt werden kann und bei der die jungen Pflanzen mit der Vorrichtung zum Verhindern von Unkrautwachstum nicht in Berührung kommen müssen.

In einzelne Verfahrensschritte zerlegt heißt das, dass der Topf mit Erde befüllt wird, in oder auf den Topf die Vorrichtung zum Verhindern von Unkrautwachstum gelegt wird und die Pflanze durch die Vorrichtung derart in die Erde gesteckt wird, dass die Vorrichtung oberhalb der Wurzel der Pflanze angeordnet ist. Dieser Vorgang kann leicht ersichtlich automatisch durchgeführt werden, da die Vorrichtung nicht manuell relativ zur Pflanze positioniert werden muss.

Vorteilhaft ist es, wenn die Vorrichtung eine Öffnung hat, die kleiner ist als ein Ballen der Pflanze. Beim Einpflanzen durch eine derartige Vorrichtung hindurch muss die Vorrichtung nachgeben können, um den Ballen der Pflanze oder deren Wurzelwerk durch die Vorrichtung hindurch in einen Topf zu pflanzen. Danach kann die Vorrichtung im Bereich des Ballens oder des Wurzelwerks der Pflanze entsprechend dessen Durchmesser verbogen bleiben oder vorzugsweise wird die Pflanze derart durch die Vorrichtung hindurchgedrückt, dass sich verbogene Bereiche der Vorrichtung nach dem Einsetzen der Pflanze wieder gerade biegen können.

Die Vorrichtung kann dabei insbesondere bei einem konischen Pflanzbehälter so in den Topf eingelegt werden, dass ein Abstand zwischen der Erde und der Vorrichtung besteht. Hierbei kann die Vorrichtung sogar auf den oberen Rand des Pflanzbehälters aufgelegt werden. Vorteilhaft ist es jedoch, wenn die Vorrichtung auf die Erde gelegt wird, da sie dann beim Einpflanzen der Pflanze durch die Vorrichtung hindurch auf der Erde aufliegt.

Wenn die Vorrichtung auf die Erde aufgelegt wird, dann wird dies in einer automatischen Pflanzanlage dadurch realisiert, dass eine Platte, die etwa die Größe der Vorrichtung hat, von oben vorzugsweise pneumatisch auf die Vorrichtung drückt und dadurch die Vorrichtung auf die Erde drückt. Dabei kann der Druck individuell eingestellt werden. Dies ermöglicht es auch die Erde etwas zusammen zudrücken und durch diesen Druck einen Gießrand im Topf zu erzeugen.

Unabhängig davon, ob die Vorrichtung auf der Erde direkt aufliegt oder darüber liegt, ist es von Vorteil, wenn der zentrale Bereich der Vorrichtung bei eingetopfter Pflanze im Wesentlichen plan um einen Stiel der Pflanze herum angeordnet ist. Dies führt dazu, dass ein besonders großer Bereich der Erde mit der Vorrichtung abgedeckt ist.

Vorteilhaft ist es, wenn mit der Vorrichtung mehrere Töpfe abgedeckt werden. Dies beschleunigt die Bearbeitung.

Besonders vorteilhaft ist es dabei, wenn mit der Vorrichtung mehrere in einer Kiste angeordnete Töpfe abgedeckt werden. Die Vorrichtung kann dann einfach auf eine Kiste mit Töpfen aufgelegt werden und die Pflanzen können anschließend durch die Vorrichtung in die Töpfe gepflanzt werden.

Um Vorrichtung und Anordnung der Töpfe sinnvoll aufeinander auszurichten, wir vorgeschlagen, dass die Töpfe in einem Raster zueinander angeordnet sind. Die Vorrichtung kann dadurch leicht auf die Abdeckung einer Kiste mit Töpfen abgestimmt werden.

Ein Ausführungsbeispiel einer erfindungsgemäßen Vorrichtung und des erfindungsgemäßen Verfahrens ist in der Zeichnung dargestellt und wird im Folgenden beschrieben.

Es zeigt
- Figur 1: eine Draufsicht auf eine Vorrichtung zum Verhindern eines Unkrautwachstums,
- Figur 2: einen Pflanztopf mit Vorrichtung zum Verhindern eines Unkrautwachstums und eingesetzter Pflanze,
- Figuren 3 bis 6: das Verfahren zum Eintopfen einer Pflanze in vier Verfahrensschritten,
- Figur 7: eine Vorrichtung für mehrere Töpfe und
- Figur 8: eine Ansicht eines Ausschnitts der Vorrichtung nach Figur 7 in vergrößerter Darstellung mit darunter angeordneten Töpfen.

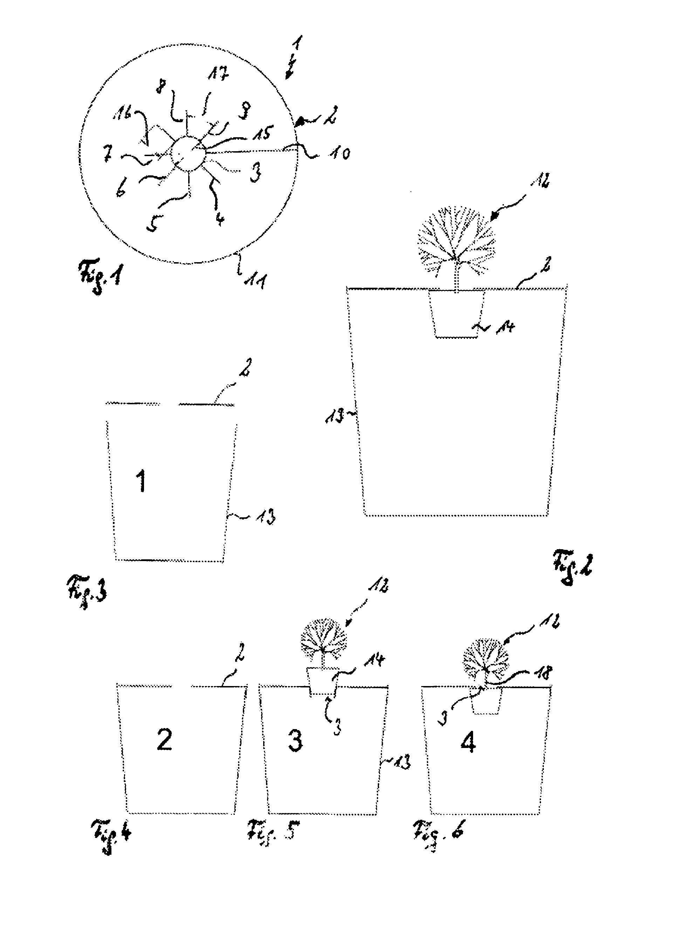

Die in Figur 1 gezeigte Vorrichtung 1 besteht aus einer runden Scheibe mit einem Durchmesser von 100 mm. Dieser Durchmesser ist auf einen Pflanztopf abgestimmt und er kann je nach Pflanztopfdurchmesser größer oder kleiner sein. Die Scheibe ist als Grundkörper 2 aus einem lichtundurchlässigen, flüssigkeitsdurchlässigen Kunststoffmaterial hergestellt. Hierzu eignet sich besonders ein Vlies aus Polyesterfasern. Ein derartiges Vlies kann auch aus einem UV-strahlenstabilen Kunststoffmaterial hergestellt werden.

Im Grundkörper 2 ist ein Schnittmuster vorgesehen, das eine zentrale Öffnung 3 und von der zentralen Öffnung 3 sternförmig weglaufende Einschnitte 4, 5, 6, 7, 8, 9 aufweist. Einer dieser Einschnitte 10 verläuft von einer äußeren Umfangslinie 11 des Grundkörpers 2 radial nach innen zur zentralen Öffnung 3.

Da die acht Einschnitte gleichmäßig beabstandet sternförmig angeordnet sind, liegt zwischen ihnen ein Winkel von jeweils 45°. Der Durchmesser der zentralen Öffnung 3 beträgt 16 mm. Die Länge der sternförmig weglaufenden Einschnitte 4 bis 9 beträgt 12 mm und somit weniger als ein Drittel und sogar weniger als ein Viertel des Radius des Grundkörpers 2. Die absoluten Längen variieren entsprechend dem Durchmesser des Grundkörpers 2.

Der Grundkörper 2 ist aus einem elastischen Material, so dass sich die Bereiche zwischen den Einschnitten 4 bis 10 verbiegen können und auch wieder in ihre ursprüngliche plane Form zurückkehren können.

Dies ermöglicht es, eine Pflanze 12 so in einen Topf 13 zu pflanzen, dass der Ballen 14 der Pflanze 12 unterhalb des Grundkörpers 2 der Vorrichtung zum Verhindern eines Unkrautwachstums liegt. Hierbei ist es unkritisch, dass der Ballen 14 geringfügig größer ist als der Durchmesser 15 der zentralen Öffnung 3. Der Ballen 14 sollte jedoch nicht größer sein als die Summe aus dem Durchmesser 15 der zentralen Öffnung 3 plus zweimal der Länge 16 der Einschnitte 4 bis 9.

Zum Einpflanzen der Pflanze 12 in einen Topf 13 wird zunächst der Grundkörper 2 wie in den Figuren 3 und 4 gezeigt von oben in den Topf 13 eingelegt. Der Grundkörper 2 kann danach entweder an den konischen Rändern des Topfes 13 anliegen oder auf einer im Topf befindlichen Erdschicht.

Wenn nun eine Pflanze 12 mit ihrem Ballen 14 durch die zentrale Öffnung 3 in den Topf 13 eingepflanzt wird, verbiegen sich je nach Durchmesser des Ballens 14 die Bereiche 17 zwischen den Einschnitten 4 bis 10, so dass sich beim Einpflanzen der Durchmesser der zentralen Öffnung 3 erweitert um das Einpflanzen zu ermöglichen.

Beim Einpflanzen wird deren Ballen 14 so tief unter die Vorrichtung gedrückt, dass die Bereiche 17 zwischen den Einschnitten 4 bis 10 wieder nach oben klappen können. Sowie die Pflanze 12 durch die Öffnung 3 eingepflanzt ist, klappen daher die Bereiche 17 zwischen den Einschnitten 4 bis 10 wieder elastisch hoch und liegen dann auf dem Ballen 14 beabstandet um einen Stiel 18 der jungen Pflanze 12.

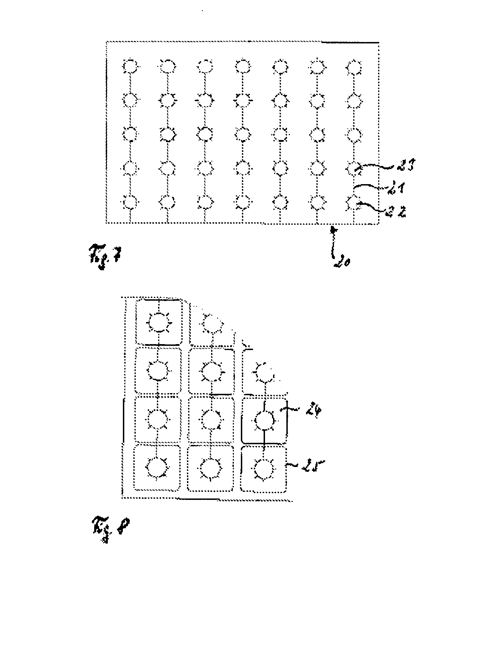

Wenn mehrere Töpfe in einer Kiste vorliegen eignet sich eine Vorrichtung 20, wie sie in Figur 7 gezeigt ist. Hier geht ein Einschnitt 21 durch mehrere Öffnungen 22, 23. Er verläuft als gerade Linie von einem Rand der Vorrichtung durch mehrere Öffnungen bis zur letzten Öffnung in einer Reihe. Dadurch wird die Vorrichtung nicht zerschnitten und sie kann leicht von den Pflanzen auch wieder abgezogen werden.

In Figur 8 sind unter der Vorrichtung 20 angeordnete von oben nicht sichtbare Töpfe 24, 25 gezeigt.

## Patentansprüche

1. Vorrichtung (1) zum Verhindern eines Unkrautwachstums mit einem Grundkörper (2) aus einem lichtundurchlässigem Kunststoffmaterial in dem ein Schnittmuster vorgesehen ist, das eine zentrale Öffnung (3) und von der zentralen Öffnung sternförmig weglaufende Einschnitte (4 - 10) aufweist, ***dadurch gekennzeichnet, dass*** das Schnittmuster einen von einer äußeren Umfangslinie radial nach innen zur zentralen Öffnung verlaufenden Einschnitt (10) aufweist.

2. Vorrichtung nach Anspruch 1, ***dadurch gekennzeichnet, dass*** der Bereich (17) des Grundkörpers (2) zwischen den sternförmig weglaufenden Einschnitten (4 - 10) elastisch ist.

3. Vorrichtung nach einem der vorhergehenden Ansprüche, ***dadurch gekennzeichnet, dass*** der Grundkörper (2) aus einem flüssigkeitsdurchlässigen Kunststoffmaterial hergestellt ist.

4. Vorrichtung nach einem der vorhergehenden Ansprüche, ***dadurch gekennzeichnet, dass*** der Grundkörper (2) aus einem Vlies aus Polyesterfasern hergestellt ist.

5. Vorrichtung nach einem der vorhergehenden Ansprüche, ***dadurch gekennzeichnet, dass*** das Kunststoffmaterial des Grundkörpers (2) UV-strahlenstabil ist.

6. Vorrichtung nach einem der vorhergehenden Ansprüche, ***dadurch gekennzeichnet, dass*** das Schnittmuster mehrere zentrale Öffnungen aufweist.

7. Vorrichtung nach Anspruch 6, ***dadurch gekennzeichnet, dass*** der Einschnitt mehrere zentrale Öffnungen schneidet.

8. Verfahren zum Eintopfen einer Pflanze (12), bei dem die Pflanze (12) in einem mit Erde gefüllten Topf (13) positioniert wird, ***dadurch gekennzeichnet, dass*** vor dem Positionieren der Pflanze (12) der Topf (13) mit einer Vorrichtung (1) zum Verhindern von Unkrautwachstum, insbesondere nach einem der vorhergehenden Ansprüche, abgedeckt wird.

9. Verfahren nach Anspruch 8, ***dadurch gekennzeichnet, dass*** der Topf (13) mit Erde befüllt wird, in oder auf den Topf (13) die Vorrichtung (1) zum Verhindern von Unkrautwachstum gelegt wird und die Pflanze (12) durch die Vorrichtung (1) derart in die Erde gesteckt wird, dass die Vorrichtung (1) oberhalb des Ballens (14) der Pflanze angeordnet ist.

10. Verfahren nach einem der Ansprüche 8 oder 9, ***dadurch gekennzeichnet, dass*** die Vorrichtung (1) eine Öffnung (3) hat, die kleiner ist als ein Ballen (14) der Pflanze (12).

11. Verfahren nach einem der Ansprüche 8 bis 10, ***dadurch gekennzeichnet, dass*** die Vorrichtung (1) auf die Erde gelegt wird.

12. Verfahren nach einem der Ansprüche 8 bis 11, ***dadurch gekennzeichnet, dass*** der zentrale Bereich der Vorrichtung (1) bei eingetopfter Pflanze (12) im Wesentlichen plan um einen Stiel (18) der Pflanze (12) herum angeordnet ist.

13. Verfahren nach einem der Ansprüche 8 bis 12, ***dadurch gekennzeichnet, dass*** mit der Vorrichtung mehrere Töpfe abgedeckt werden.

14. Verfahren nach einem der Ansprüche 8 bis 13, ***dadurch gekennzeichnet, dass*** mit der Vorrichtung mehrere in einer Kiste angeordnete Töpfe abgedeckt werden.

15. Verfahren nach einem der Ansprüche 13 bis 14, ***dadurch gekennzeichnet, dass*** die Töpfe in einem Raster zueinander angeordnet sind.
